# EUROPEAN PATENT SPECIFICATION

(11) **EP 2 573 846 B1**
(45) Date of publication and mention of the grant of the patent: **02.04.2014**
(21) Application number: 12006541.2
(22) Date of filing: 18.09.2012
(51) Int. Cl.: H01M 4/62, H01M 4/04, H01M 4/134, H01M 4/1395, H01M 4/38, H01M 10/0525

(54) **Negative electrode paste, negative electrode and method for manufacturing negative electrode, and non-aqueous electrolyte secondary battery**
Negativelektrodenpaste, Negativelektrode und Verfahren zur Herstellung einer Negativelektrode, und nichtwässrige Elektrolyt-Sekundärbatterie
Pâte pour électrode négative, électrode négative et procédé de fabrication d'électrode négative et batterie secondaire à électrolyte non aqueux

(30) Priority: 22.09.2011 JP 2011206874
(43) Date of publication of application: 27.03.2013
(73) Proprietor: Shin-Etsu Chemical Co., Ltd., Chiyoda-ku Tokyo 100 (JP)
(72) Inventor: Tatsuhiko, Ikeda, Annaka-shi Gunma-ken (JP); Satoru, Miyawaki, Annaka-shi Gunma-ken (JP)
(74) Representative: Wibbelmann, Jobst

(56) References cited:
- EP-A1- 2 261 934
- WO-A2-2009/112714
- US-A1- 2008 003 503

## Description

### Background of the Invention

### Field of the Invention

The present invention relates to a negative electrode paste, a negative electrode with the negative electrode and a method for manufacturing thereof, and a non-aqueous electrolyte secondary battery.

### Description of the Related Art

As mobile instruments rapidly develop and electric automobiles gain power, a demand for improvement toward larger capacity, smaller size and lighter weight, and higher safety is very strong. In particular, a lithium ion secondary battery is light in weight, high in voltage and large in capacity; accordingly, it is widely used as electric storage device.

At present time, as a negative electrode material of a lithium ion secondary battery, a graphite-based material is mainly used. However, a graphite-based negative electrode material is small in battery capacity per unit weight and has become incapable of responding to a demand toward an improvement in battery capacity; accordingly, battery manufacturers and others are in study of replacing graphite with other negative electrode material. Among these, a silicon-based negative electrode active material is remarkably large in capacity per unit weight; accordingly, it is gathering attention as a negative electrode material that can replace graphite.

As a method that uses silicon oxide that is a silicon-based negative electrode active material in a negative electrode, a method disclosed in patent document 1, for example is known. Further, as a method where a carbon layer is coated on a surface of silicon oxide particles by chemical vapor deposition, a method disclosed in patent document 2, for example is known.

However, it was difficult to provide a method where while without damaging or improving the battery characteristics, a dimension change when a binder that greatly contracts owing to solvent drying and curing, in particular, a polyimide resin or a polyamide-imide resin is used as a binder (patent document 3) is alleviated, and curling during electrode production is prevented.

### CITATION LIST

### Patent Documents

Patent Document 1: Japanese Patent No. 2997741
Patent Document 2: Japanese Unexamined Patent Publication (Kokai) No. 2002-42806
Patent Document 3: Japanese Unexamined Patent Publication (Kokai) No. 2011-60676
Patent Document 4: Japanese Unexamined Patent Publication (Kokai) No. 2009-231829
Patent Document 5: Japanese Unexamined Patent Publication (Kokai) No. 2010-153375

### Summary of the Invention

Usually, a negative electrode is prepared by coating and drying a negative electrode paste that contains a negative electrode active material and a binder on a current collector, and other steps. However, a silicon-based negative electrode active material is large in volume expansion during charge/discharge in comparison with that of a graphite-based negative electrode active material. According, when a binder that has good record in graphite base such as polyvinylidene fluoride resin (PVDF) or styrene butadiene rubber (SBR) is used, the volume expansion of the silicon-based negative electrode active material can not be suppressed. There was a problem of the cycle characteristics that as the charge/discharge is repeated, a negative electrode active material is separated from a current collector to lose a function as a secondary battery.

Accordingly, a method has been developed, in which a polyimide resin and a polyamide-imide resin are used as a high strength binder that can improve the adhesiveness between an electrolytic cupper foil and a negative electrode active material, which are generally used in a negative electrode current collector, and can suppress the volume expansion. According to the method, by using polyimide resin and polyamide-imide resin as a binder, the cycle characteristics can be improved.

However, in both of a case where a negative electrode is prepared by a continuous coating machine with a binder small in the thermal shrinkage such as PVDF that has been so far used and a case where a negative electrode is prepared by a continuous coating machine with a polyimide resin or polyamide-imide resin that is large in thermal expansion, a negative electrode deforms owing to the thermal shrinkage of the coated negative electrode paste to result in generating large fold in a negative electrode (so-called curling). When the curling occurred, it is difficult to wind a negative electrode or to coat a negative electrode paste on both surfaces. Accordingly, when a negative electrode on which a negative electrode paste was coated is wound on a roll of a continuous coating machine, to an extent that a negative electrode paste coated on a front side of a current collector does not stick to a back side of a wound current collector, various devices such as decreasing a temperature of the continuous coating machine, decreasing a coating speed, and lengthening a drying zone are necessary on the continuous coating machine side. Further, upon mass production, drying condition has to be finely controlled for each device, and large equipment cost and labor burden are necessary. Accordingly, it is desired to suppress the curling to improve the productivity.

The present invention was made to solve the above problem and intends to provide a negative electrode paste that is used to produce a negative electrode of a non-aqueous electrolyte secondary battery, can prevent a negative electrode from curling when a negative electrode paste is coated on a current collector and dried, and can produce a negative electrode that has excellent cycle characteristics and large battery capacity.

Further, the present invention intends to provide a negative electrode that is suppressed in the curling of a negative electrode and has excellent cycle characteristics and large battery capacity, a method for manufacturing the same, and a non-aqueous electrolyte secondary battery having the negative electrode.

In order to solve the problem, the present invention provides a negative electrode paste that is used to manufacture a negative electrode of a non-aqueous electrolyte secondary battery and includes:
(A) a silicon-based negative electrode active material;
(B) a binder including at least one of a polyimide resin represented by the following general formula (1), 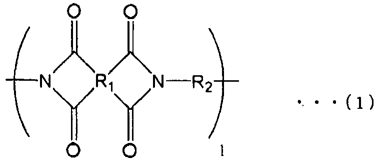 wherein R₁ represents a tetravalent alkyl group or a tetravalent aromatic hydrocarbon group, R₂ represents a divalent alkyl group or a divalent aromatic hydrocarbon group, and 1 represents an integer satisfying 2 ≤ 1 ≤ 500 and a polyamide-imide resin represented by the following general formula (2), 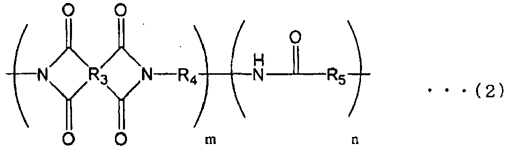 wherein R₃ represents a tetravalent alkyl group or a tetravalent aromatic hydrocarbon group, R₄ and R₅ represent a divalent alkyl group or a divalent aromatic hydrocarbon group, m represents an integer satisfying 2 ≤ m ≤ 500, and n represents an integer satisfying 2 ≤ n ≤ 500; and
(C) an ionic liquid.

By containing a silicon-based negative electrode active material, a binder including a polyimide resin and/or a polyamide-imide resin, and an ionic liquid like this, a negative electrode paste that can suppress shrinkage of a negative electrode paste and curling of a negative electrode when a negative electrode paste is coated on a current collector and dried can be obtained. Further, a negative electrode paste that, even when a mixing ratio of the binder and ionic liquid is slight, does not damage the adhesiveness to a current collector of the silicon-based negative electrode active material and allows to manufacture a negative electrode that has excellent cycle characteristics and large battery capacity can be obtained.

Further, the (C) ionic liquid is preferred to have the melting temperature of 30°C or less.

The ionic liquid like this can improve the dispersibility to a paste at room temperature and can prevent a solid from precipitating after coating.

The (C) ionic liquid is preferably contained in the range of 0.1 to 50% by mass with the (B) binder assigned to 100% by mass.

When the content of the ionic liquid is 0.1% by mass or more with respect to 100% by mass of the binder, the curling prevention effect can be sufficiently exerted, and when it is 50% by mass or less, a resin that is used as a binder can be prevented from curing to be able to prevent the battery characteristics from greatly deteriorating.

In the invention, a negative electrode obtained by coating the negative electrode paste on a current collector and by drying is provided.

A negative electrode like this is prevented from curling; accordingly, a negative electrode having excellent cycle characteristics and large battery capacity can be obtained.

Further, in the present invention, also a non-aqueous electrolyte secondary battery with the negative electrode as a negative electrode is provided.

A non-aqueous electrolyte secondary battery like this has excellent cycle characteristics and large battery capacity.

Further, the present invention provides a method for manufacturing a negative electrode, in which a negative electrode paste is coated on a current collector, dried and used as a negative electrode of a non-aqueous electrolyte secondary battery, the method including the steps of coating the negative electrode paste of the present invention on the current collector; and drying the negative electrode paste coated on the current collector.

According to a method for manufacturing a negative electrode that uses a negative electrode paste of the present invention like this, curling that occurs during coating and drying can be suppressed; accordingly, negative electrodes can be produced with excellent productivity. In addition, a negative electrode paste that uses a polyamide-imide resin or a polyimide resin as a binder can be dried under condition of 300°C to 400°C. However, since the vapor pressure of the ionic liquid is very low, it remains in the electrode without scattering even under the condition like this to contribute to improve the wettability of the electrode and electrolyte. When a slight amount of the ionic liquid is used, the cycle characteristics are not adversely affected. Accordingly, without adversely affecting on the battery characteristics such as battery capacity and the cycle characteristics, negative electrodes can be readily produced.

As was described above, according to the present invention, when an ionic liquid is added to a negative electrode paste in which a silicon-based negative electrode active material is blended, solvent drying and curing shrinkage of a polyimide resin and a polyamide-imide resin that are a binder can be alleviated. Accompanying this, the curling of a negative electrode generated by dimensional change of a negative electrode film can be suppressed, and, without applying an improvement on a continuous coating machine side, by devices only on a material side, the productivity of negative electrodes can be improved.

Further, even when the ionic liquid is added, the battery characteristics such as the battery capacity and the cycle characteristics are not damaged, or by appropriately selecting an electrolyte and a separator, the battery characteristics can be improved. In particular, since an ionic liquid blended in a negative electrode paste is very low in the vapor pressure, it remains under condition from 300°C to 400°C, which is a drying condition of a negative electrode that uses a polyamide-imide resin or a polyimide resin as a binder. The ionic liquid remained inside a negative electrode improves the wettability of an electrolytic solution to an electrode. When an electrolyte that is difficult to permeate into an electrode such as a gel electrolyte is used, by adding an ionic liquid, a reaction between lithium ions and a negative electrode is homogenized, thereby an improvement in the battery characteristics can be expected.

An effect of improving the wettability of an electrolyte solution is highly effective also in shortening an aging time of a battery. In general, after a lithium ion secondary battery is prepared, in order to homogenize a state inside a cell, the step of aging by standing still for about 1 to 5 days is necessarily conducted. By undergoing the step, deviation of the charge/discharge characteristics between cells can be suppressed. However, by allowing to contain an ionic liquid in an electrode, in particular, homogenization on a negative electrode side of which influence on the charge/discharge characteristics is large can be accelerated to be able to obtain stable charge/discharge characteristics even if an aging time is short.

In an ionic liquid that is added to inhibit the curling from occurring, as illustrated above, many secondary effects can be expected.

### Detailed Description of the Preferred Embodiments

In what follows, a negative electrode paste, a negative electrode and a method for manufacturing the same, and a non-aqueous electrolyte secondary battery of the present invention will be detailed. However, the present invention is not restricted thereto.

As was described above, a development of a negative electrode paste for manufacturing a negative electrode that can suppress the curling, and has excellent cycle characteristics and large battery capacity has been demanded.

The present inventors studied variously to achieve the object and found that when an ionic liquid is added to a negative electrode paste, during manufacture of negative electrodes, shrinkage of a negative electrode film during solvent drying and curing of a binder can be suppressed to be able to suppress the curling of an entire negative electrode including a current collector. Further, it was found that since even when an amount of added ionic liquid is very slight relative to an electrode active material, an effect can be exerted, battery capacity per unit weight that is largely affected by a ratio of a weight of an active material in a negative electrode film is not hardly damaged, and also the cycle characteristics are not damaged. Further, it was found that also the wettability of the electrode and electrolyte solution are enhanced, and in a gel electrolyte, the characteristics are improved and the aging time is shortened, and fluctuation of the characteristics between cells can be suppressed. Still further, it was found that when a mixing ratio of the binder and ionic liquid is slight, without damaging the adhesiveness of a silicon-based negative electrode active material to a current collector, a negative electrode paste that allows to manufacture a negative electrode having excellent cycle characteristics and large battery capacity is obtained. Thereby, the present invention came to completion.

That is, the present invention provides a negative electrode paste that is used to manufacture a negative electrode of a non-aqueous electrolyte secondary battery and includes:
(A) a silicon-based negative electrode active material;
(B) a binder containing at least one of a polyimide resin represented by the following general formula (1), 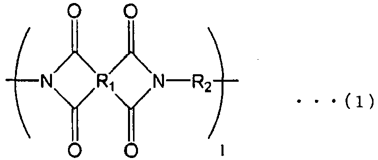 wherein R₁ represents a tetravalent alkyl group or a tetravalent aromatic hydrocarbon group, R₂ represents a divalent alkyl group or a divalent aromatic hydrocarbon group, and 1 represents an integer satisfying 2 ≤ 1 ≤ 500 and a polyamide-imide resin represented by the following general formula (2), 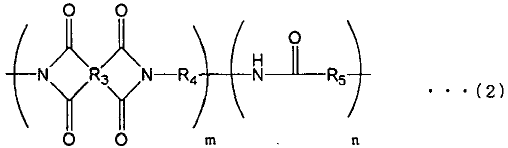 wherein R₃ represents a tetravalent alkyl group or a tetravalent aromatic hydrocarbon group, R₄ and R₅ represent a divalent alkyl group or a divalent aromatic hydrocarbon group, m represents an integer satisfying 2 ≤ m ≤ 500, and n represents an integer satisfying 2 ≤ n ≤ 500; and
(C) an ionic liquid.

In what follows, details thereof will be described.

### [(A) Silicon-based Negative Electrode Active Material]

In the present invention, a silicon-based negative electrode active material is used as a negative electrode active material. The silicon-based negative electrode active material is a generic name of a negative electrode material that uses silicon and a silicon compound that reacts with lithium ion during charge/discharge as an active material.

Examples of the silicon-based negative electrode active materials like this include: so-called metallurgical grade silicon prepared by reducing silicon dioxide with carbon; industrial grade silicon obtained from metallurgical grade silicon by reducing impurity by oxidation or unidirectional solidification; high purity silicon that is different in crystalline state such as high purity single crystal, polycrystal, and amorphous, which are prepared from silane obtained by reacting silicon; and silicon obtained by simultaneously purifying industrial grade silicon by sputtering or EB vapor deposition and by adjusting crystal state or precipitation state.

Further, silicon oxides that are compounds between silicon and oxygen, various kinds of alloys of silicon, and silicon compounds of which crystal state is adjusted by quenching method can be cited. Among these, a silicon-based negative electrode active material that has a structure where silicon nanoparticles of which outer side is coated with a carbon film are dispersed in silicon oxide is particularly preferred because the expansion/shrinkage accompanying the charge/discharge is suppressed and also the cycle characteristics are excellent.

Further, the negative electrode paste of the present invention, as long as it contains a silicon-based negative electrode active material, is not restricted to single use of the silicon-based negative electrode active material. In particular, when a silicon-based negative electrode active material is blended with a carbon-based negative electrode active material such as graphite, a negative electrode paste that contains a hybrid negative electrode active material can be obtained.

### [(B) Binder]

A (B) binder in the present invention contains a polyimide resin represented by the following general formula (1) or a polyamide-imide resin represented by the following general formula (2), and may contain both of polyimide resin and polyamide-imide resin. A (B) binder in the negative electrode paste of the present invention works to bind a negative electrode active material and a current collector.

### (Polyimide Resin)

A polyimide resin in the present invention is represented by the following general formula (1), 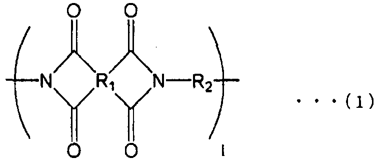 wherein R₁ represents a tetravalent alkyl group or a tetravalent aromatic hydrocarbon group, R₂ represents a divalent alkyl group or a divalent aromatic hydrocarbon group, and 1 represents an integer satisfying 2 ≤ 1 ≤ 500. In particular, preferable examples of the polyimide resins like this include aromatic polyimide resins.

In the general formula (1), R₁ represents a tetravalent alkyl group or a tetravalent aromatic hydrocarbon group. R₁ is not particularly restricted but is preferable to be a tetravalent phenyl group or a tetravalent biphenyl group.

Further, R₂ represents a divalent alkyl group or a divalent aromatic hydrocarbon group. R₂ is not particularly restricted but is preferable to be a divalent phenyl group, a divalent biphenyl group, or a divalent phenylether group.

Still further, in the general formula (1), 1 represents an integer satisfying 2 ≤ 1 ≤ 500. 10 ≤ 1 ≤ 200 is preferable and 25 ≤ 1 ≤ 150 is more preferable.

The polyimide resin can be produced according to a known method without particularly restricting. A weight average molecular weight is preferably in the range of 1,000 to 500,000 and more preferably in the range of 10,000 to 100,000.

### (Polyamide-imide Resin)

A polyamide-imide resin in the present invention is represented by the following general formula (2), 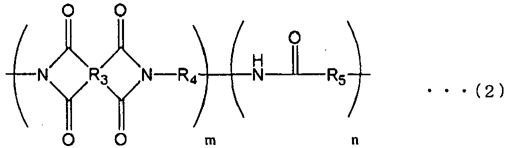 wherein R₃ represents a tetravalent alkyl group or a tetravalent aromatic hydrocarbon group, R₄ and R₅ represent a divalent alkyl group or a divalent aromatic hydrocarbon group, m represents an integer satisfying 2 ≤ m ≤ 500, and n represents an integer satisfying 2 ≤ n ≤ 500. In particular, preferable examples of the polyamide-imide resins like this include aromatic polyamide-imide resins.

In the general formula (2), R₃ represents a tetravalent alkyl group or a tetravalent aromatic hydrocarbon group. R₃ is not particularly restricted but is preferable to be a tetravalent phenyl group, or a tetravalent biphenyl group.

Further, R₄ and R₅ represent a divalent alkyl group or a divalent aromatic hydrocarbon group. R₄ and R₅ are not particularly restricted but are preferable to be a divalent phenyl group, a divalent biphenyl group, or a divalent phenylether group.

Still further, in the general formula (2), m represents an integer satisfying 2 ≤ m ≤ 500 and n represents an integer satisfying 2 ≤ n ≤ 500. Here, m is preferable to be 10 ≤ m ≤ 200 and more preferable to be 25 ≤ m ≤ 150. Further, n is preferable to be 10 ≤ n ≤ 200 and more preferable to be 25 ≤ n ≤ 150. Further, a ratio of the numbers of amide groups/imide groups in the polyamide-imide resin is not particularly restricted but is preferable to be 10/90 to 90/10, and more preferable to be 30/70 to 70/30.

The polyamide-imide resin can be manufactured according to a known method without particularly restricting, and a weight average molecular weight is preferably 1,000 to 500,000 and more preferably 10,000 to 100,000.

A mixing ratio of the (B) binder and the (A) silicon-based negative electrode active material is, with respect to 100 parts by mass of the (A) silicon-based negative electrode active material, preferably 1 to 30 parts by mass of the (B) binder, more preferably 5 to 30 parts by mass thereof and still more preferably 5 to 20 parts by mass thereof. When the binder is 5 parts by mass or more, it is preferable because the adhesiveness of a (A) silicon-based negative electrode active material and a current collector can be sufficiently exerted and also the cycle characteristics can be maintained. Further, when the binder is 30 parts by mass or less, a negative electrode paste for manufacturing a negative electrode having sufficient cycle characteristics and large capacity is preferably obtained.

A negative electrode paste that uses the polyamide-imide resin or polyimide resin in a (B) binder, even when a main drying process is conducted under the condition of 300°C to 400°C, because vapor pressure of a (C) ionic liquid described below is very small, does hardly scatter and remains in an electrode. Accordingly, when a (B) binder having a polyamide-imide resin or polyimide resin is used, a negative electrode paste that allows to readily manufacture negative electrodes can be obtained.

### [(C) Ionic Liquid]

In the negative electrode paste of the present invention, as curling countermeasures during negative electrode manufacture, an ionic liquid is added. In order to improve the dispersibility of the paste at room temperature and to inhibit solid from precipitating after coating, the melting temperature of an ionic liquid is preferred to be 30°C or less. Regarding an amount to be added thereof, the larger the amount thereof is, the more the curling prevention effect can be exerted. The smaller the amount thereof is, the higher the density of a negative electrode active material is, and, without hindering the curing of a resin that is used in a binder, the better the battery characteristics are. Accordingly, when considering the curling suppression effect and the battery characteristics, an addition amount of the (C) ionic liquid is, with respect to a solid content of a binder, preferably 0.1 to 50% by mass and more preferably 1.0 to 20% by mass.

In patent documents 4 and 5, examples where an ionic liquid is used in an electrode material are described. However, in both cases, the intended purpose is utterly different from that of the present invention, that is, both cases that do not contain a polyamide-imide resin or polyimide resin do not intend to prevent the negative electrode paste that contains a silicon-based negative electrode active material and a polyamide-imide resin or polyimide resin like the present invention from curling.

In the present invention, an ionic liquid is added as a (C) component. The ionic liquid is a generic name of ionic substances that show a liquid state under room temperature and has a cationic component and an anionic component.

Examples of cationic components of the ionic liquid include ammonium cation, pyrrolidinium cation, piperidinium cation (the following general formula (3)), imidazolinium cation (the following general formula (4)), pyridinium cation (the following general formula (5)), phosphonium cation (the following general formula (6)), and sulfonium cation (the following general formula (7)). 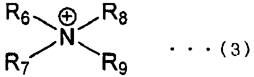 wherein R₆ to R₉ represent an alkyl group or an alkoxyalkyl group the same with or different from each other. Further, two of R₆ to R₉ may have a ring structure that shares the same functional group. In particular, when R₆ and R₇ are bonded via a saturated hydrocarbon group having five carbon atoms, it is called a piperidinium cation. 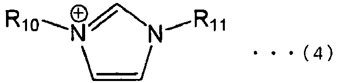 wherein R₁₀ and R₁₁ represent an alkyl group or an alkoxyalkyl group the same with or different from each other. 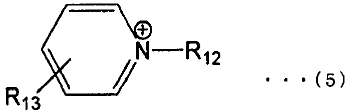 wherein R₁₂ and R₁₃ represent an alkyl group or an alkoxyalkyl group. Substituents on an aromatic ring may be two or more. 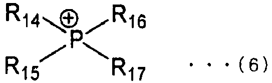 wherein R₁₄ to R₁₇ represent an alkyl group or an alkoxyalkyl group. Further, two of R₁₄ to R₁₇ may have a ring structure that shares the same functional group. 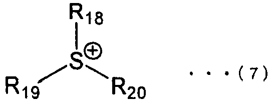 wherein R₁₈ to R₂₀ represent an alkyl group or an alkoxyalkyl group. Further, two of R₁₈ to R₂₀ may have a ring structure that shares the same functional group.

Example of the anionic components include bis(trifluoromethanesufonyl)imide anion, bis(pentafluoroethanesulfonyl)imide anion, bis(fluorosulfonyl)imide anion, trifluoromethanesulfonate anion, methyl sulfate anion, ethyl sulfate anion, methanesulfonate anion, ethanesulfonate anion, p-toluenesulfonate anion, hydrogen sulfate anion, tetrafluoroborate anion, bis[oxalato(2-)]borate anion, trifluoro(trifluoromethyl)borate anion, hexafluorophosphate anion, dimethyl phosphate anion, diethyl phosphate anion, tris(pentafluoroethyl)trifluorophosphate anion, chloride ion, bromide ion, iodide ion, and dicyanamide anion.

By combining the cations and anions described above, various kinds of ionic liquids can be selected. However, the ionic liquid usable in the present invention is not restricted by only a combination of the anions and cations described above. From a nature of the ionic liquid used, it is used on a negative electrode side; accordingly, an ionic liquid that does not decompose or is difficult to decompose at a potential where lithium precipitates on a negative electrode is preferable.

When considering the width of potential window and easy availability, piperidinium salts and imidazolium salts are preferable. Particularly preferable examples include N-methyl-N-propylpiperidinium bis(trifluoromethanesulfonyl)imide (hereinafter referred to as PP13-TFSI), N-methyl-N-propylpyrrolidinium bis(trifluoromethanesulfonyl)imide (hereinafter referred to as P13-TFSI), N-methyl-N-butylpyrrolidinium bis(trifluoromethanesulfonyl)imide (hereinafter referred to as P14-TFSI), N,N,N-trimethyl-N-propylammonium bis(trifluoromethanesulfonyl)imide (hereinafter referred to as TMPA-TSFI), 1-ethyl-3-methylimidazolium bis(fluoromethanesulfonyl)imide (hereinafter referred to as EMIm-FSI), 1-ethyl-3-methylimidazolium tris(pentafluoroethyl)trifluorophosphate (hereinafter referred to as EMIm-FAP), and 1-(2-methoxyethyl)-1-methylpyrrolidinium tris(pentafluoroethyl)trifluorophosphate (hereinafter referred to as MOEMPL-FAP).

### [(D) Other Additives]

In a negative electrode paste of the present invention, without restricting to (A) to (C) components, other additives may be added within a range that does not disturb the object of the present invention.

### (Conductive Auxiliary Agent)

Examples of the conductive auxiliary agents include carbon black, acetylene black, and carbon fibers.

### (Thickener)

A thickener such as methylcellulose or carboxymethylcellulose can be properly added to obtain desired viscosity within a range that does not disturb the object of the present invention.

### (Solvent)

Other than the above, a solvent can be added to a negative electrode paste of the present invention within a range that does not disturb the object of the present invention. As a solvent, a solvent that can dissolve a binder is preferred. Examples thereof include organic solvents such as N-methyl-2-pyrrolidone (hereinafter referred to as NMP), N,N-dimethylformamide, dimethylacetamide, dimethyl sulfoxide, hexamethyl sulfoxide, hexamethyl sulfolamide, and methyl ethyl ketone. These can be used singularly or in a combination thereof.

Further, an ionic liquid and a solvent may be mixed in advance and used when a negative electrode paste is prepared. When an ionic liquid and a solvent are immiscible, a surfactant or the like may be appropriately added as required within a range that does not disturb the object.

### (Others)

When a negative electrode paste is kneaded or dispersed, within a range that does not disturb the object of the present invention, various kinds of dispersants, surfactants, stabilizers and so forth can be added as required.

### [Preparation of Negative Electrode Paste]

Without particularly restricting, a negative electrode paste can be prepared according to a known method. For example, after mixing (A) a silicon-based negative electrode active material, (B) a binder, (C) an ionic liquid, and other additives, the mixture can be defoamed in a vacuum state or can be stirred while applying supersonic to inhibit an active material from aggregation.

### [Negative Electrode]

In the present invention, a negative electrode is provided by coating the negative electrode paste on a current collector and drying. The negative electrode like this is inhibited from curling, and, since a mixing ratio of a silicon-based negative electrode active material is large and a mixing ratio of a binder and an ionic liquid is small, a negative electrode having excellent cycle characteristics and large battery capacity is obtained.

As a current collector, a material that is usually used as a current collector of a negative electrode such as copper foil and nickel foil can be used without particular restriction. Further, a coating thickness of a negative electrode paste, a shape and dimension of a negative electrode can be appropriately selected. The negative electrode paste may be coated on either one side of a current collector or both sides thereof.

### [Method for Manufacturing Negative Electrode]

Further, the present invention provides a method for manufacturing a negative electrode, in which a negative electrode paste is coated on a current collector, dried and used as a negative electrode of a non-aqueous electrolyte secondary battery, the method including the steps of:
coating the negative electrode paste of the present invention on the current collector; and
drying the negative electrode paste coated on the current collector.

According to a method for manufacturing a negative electrode, which uses a negative electrode paste of the present invention like this, negative electrodes can be inhibited from curling during coating and drying and therefore can be manufactured with good productivity. Further, when a polyamide-imide resin or a polyimide resin is used as a binder, a negative electrode paste can be dried under the condition of 300°C to 400°C. However, when an ionic liquid is used together with a negative electrode paste, since the vapor pressure of the ionic liquid is very low, the ionic liquid does not scatter even under such condition and remains in the electrode to contribute to improve the wettability of the electrode and electrolyte. When the ionic liquid is used slightly, it does not adversely affect on the cycle characteristics. Accordingly, without adversely affecting on the battery characteristics such as the battery capacity and the cycle characteristics, negative electrodes can be readily manufactured.

The negative electrode paste may be coated either on one side or on both sides of a current collector. A coating thickness, drying time, and so forth are not particularly restricted and can be appropriately determined depending on desired characteristics of a negative electrode.

### [Non-aqueous Electrolyte Secondary Battery]

Further, in the present invention, a non-aqueous electrolyte secondary battery with the negative electrode as a negative electrode is provided. A non-aqueous electrolyte secondary battery like this has excellent cycle characteristics and large battery capacity. What are well known can be used in a positive electrode, a non-aqueous electrolyte solution, a separator, and so forth without particular restriction.

### [Examples]

In what follows, with reference to examples and comparative examples of a negative electrode paste of the present invention, a negative electrode and a method for manufacturing the same, and a non-aqueous electrolyte secondary battery, the present invention will be detailed. However, the present invention is not restricted thereto.

### [Example 1]

### <Preparation of Negative Electrode Active Material>

Firstly, 100 g of silicon oxide SiOₓ (x = 1.01) having an average particle size of 5 µm, and a BET specific surface area of 3.5 m²/g was charged into a batch heating furnace. While depressurizing the inside of the furnace by an oil rotary vacuum pump, the inside of furnace was heated to 1100°C, and, after reaching 1100°C, a CH₄ gas was flowed in at 0.3 NL/min to apply carbon coating for 5 hours. At this time, the decompression degree was 800 Pa. After the treatment, a temperature was lowered, and 97.5 g of black particles was obtained, the black particles being obtained by coating particles in which Si is dispersed in SiO₂ with carbon was obtained. The resulted black particles were conductive particles that have an average particle size of 5.2 µm, the BET specific surface area of 6.5 m²/g, and an amount of coated carbon of 5.1% by mass with respect to the black particles.

### <Preparation of Polyamide-imide Resin Solution>

While flowing a nitrogen gas into a 2L four-necked flask, 192.0 g (1.0 mole) of trimellitic anhydride as polyvalent carboxylic anhydride, 250. 0 g (1.0 mole) of 4,4'-diphenylmethane diisocyanate as polyvalent isocyanate, and 708 g of NMP were charged and heated up to 100°C. After 3 hours, a temperature was raised to 120°C and as it is a reaction was continued for 6 hours. Thereafter, the resultant was diluted with 118 g of NMP, thereby a solution of polyamide-imide resin was obtained. A weight average molecular weight by GPC was 18,000.

### <Preparation of Electrolyte Solution>

As a non-aqueous electrolyte solution, a solution was prepared by dissolving LiPF₆ in a mixed solution of ethylene carbonate : diethyl carbonate = 1 : 1 (volume ratio) to be 1.0 mol/L. An operation for preparing an electrolyte solution was conducted in a glove box filled with argon gas to inhibit moisture in air from diffusing into an electrolyte solution.

### <Preparation of Electrode>

Firstly, 90.0 parts by mass of prepared negative electrode active material and 10.0 parts by mass (in terms of solid content) of the polyamide-imide resin were mixed, and 0.5 parts by mass of PP13-TFSI (N-methyl-N-propylpiperidinium bis(trifluoromethanesulfonyl)imide) was further added. Therein, N-methyl-2-pyrrolidone was added to prepare a negative electrode paste. The paste was coated on one side of an electrolytic copper foil having a width of 200 mm and a thickness of 11 mm by doctor blade (coating width: 100 mm, a coating thickness: 60 µm), after vacuum drying at 85°C for 30 minutes, an electrode was shaped under pressure with by roller press, the electrode was vacuum dried at 350°C for 2 hours and punched into disc having a diameter of 15.858 mm as a negative electrode.

### <Preparation of Positive Electrode>

Further, 94.0 parts by mass of lithium cobalt oxide, 3.0 parts by mass of acetylene black, and 3.0 parts by mass of polyvinylidene fluoride were mixed, still further, N-methyl-2-pyrrolidone was added to form a paste. The paste was coated on an aluminum foil having a thickness of 16 µm and, after drying at 85°C for 1 hours, was pressure molded by a roller press to form an electrode, and the electrode was, after vacuum drying at 130°C for 5 hours, punched into a disc having a diameter of 15.858 mm as a positive electrode.

### <Preparation of Lithium Ion Secondary Battery>

With the prepared negative electrode and positive electrode, the prepared non-aqueous electrolyte solution, a polypropylene microporous film having a thickness of 20 µm as a separator, a coin lithium ion secondary battery for evaluation was prepared.

### <Evaluation of Curling>

After coating the paste on a electrolytic copper foil according to a method described above, without utterly applying a curl correction operation such as putting a weight, vacuum drying was applied at 85°C for 30 minutes. Thereafter, an electrode sheet was placed on a flat place, and, how much both of right and left ends of a portion where the paste was coated floated from a horizontal surface were measured, an average value thereof was calculated to evaluate the curling. Result thereof is shown in Table 1.

### <Charge/Discharge Test>

After a coin lithium ion secondary battery prepared was left at room temperature overnight, a charge/discharge test was performed by a secondary battery charge/discharge test apparatus (manufactured by ASKA Electronic Co., Ltd.). Firstly, charge was conducted at a constant current corresponding to 0.5 CmA until a voltage of a coin cell reaches 4.2 V, after the cell voltage has reached 4.2 V, charge was performed by reducing a current while maintaining the voltage, and at a time point when a current value became smaller than a value corresponding to 0.1 CmA, the charge was ended. Discharge was conducted at a constant current corresponding to 0.5 CmA, at a time point when the cell voltage has reached 2.5 V, the discharge was ended.

By repeating the above-described charge/discharge test, a charge/discharge test after 100 cycles of a lithium ion secondary battery for evaluation was performed. The capacity retention rate after 100 cycles (%): discharge capacity at 100 cycles / discharge capacity at the initial time is shown in Table 1.

### [Example 2]

Except that a negative electrode paste of the present invention was prepared with 0.01 parts by mass (0.1% by mass with respect to the binder) of PP13-TFSI as an ionic liquid, under the same conditions as those of example 1, a negative electrode and a non-aqueous electrolyte secondary battery were prepared, and each evaluation was conducted.

### [Example 3]

Except that a negative electrode paste of the present invention was prepared with 0.01 parts by mass (1.0% by mass with respect to the binder) of PP13-TFSI as an ionic liquid, under the same conditions as those of example 1, a negative electrode and a non-aqueous electrolyte secondary battery were prepared, and each evaluation was conducted.

### [Example 4]

Except that a negative electrode paste of the present invention was prepared with 2.0 parts by mass (20% by mass with respect to the binder) of PP13-TFSI as an ionic liquid, under the same conditions as those of example 1, a negative electrode and a non-aqueous electrolyte secondary battery were prepared, and each evaluation was conducted.

### [Example 5]

Except that a negative electrode paste of the present invention was prepared with 5.0 parts by mass (50% by mass with respect to the binder) of PP13-TFSI as an ionic liquid, under the same conditions as those of example 1, a negative electrode and a non-aqueous electrolyte secondary battery were prepared, and each evaluation was conducted.

### [Example 6]

Except that a negative electrode paste of the present invention was prepared with 10.0 parts by mass (100% by mass with respect to the binder) of PP13-TFSI as an ionic liquid, under the same conditions as those of example 1, a negative electrode and a non-aqueous electrolyte secondary battery were prepared, and each evaluation was conducted.

### [Example 7]

Except that a negative electrode paste of the present invention was prepared with 0.5 parts by mass (5.0% by mass with respect to the binder) of P13-TFSI (N-methyl-N-propylpyrrolidinium bis(trifluoromethanesulfonyl)imide) as an ionic liquid, under the same conditions as those of example 1, a negative electrode and a non-aqueous electrolyte secondary battery were prepared, and each evaluation was conducted.

### [Example 8]

Except that a negative electrode paste of the present invention was prepared with 0.5 parts by mass (5.0% by mass with respect to the binder) of P14-TFSI (N-methyl-N-butylpyrrolidinium bis(trifluoromethanesulfonyl)imide) as an ionic liquid, under the same conditions as those of example 1, a negative electrode and a non-aqueous electrolyte secondary battery were prepared, and each evaluation was conducted.

### [Example 9]

Except that a negative electrode paste of the present invention was prepared with 0.5 parts by mass (5.0% by mass with respect to the binder) of TMPA-TFSI (N, N, N-trimethyl-N-propylammonium bis(trifluoromethanesulfonyl)imide) as an ionic liquid, under the same conditions as those of example 1, a negative electrode and a non-aqueous electrolyte secondary battery were prepared, and each evaluation was conducted.

### [Example 10]

Except that a negative electrode paste of the present invention was prepared with 0.5 parts by mass (5.0% by mass with respect to the binder) of EMIm-FSI (1-ethyl-3-methylimidazolium bis(fluoromethanesulfonyl)imide) as an ionic liquid, under the same conditions as those of example 1, a negative electrode and a non-aqueous electrolyte secondary battery were prepared, and each evaluation was conducted.

### [Example 11]

Except that a negative electrode paste of the present invention was prepared with 0.5 parts by mass (5.0% by mass with respect to the binder) of EMIm-FAP (1-ethyl-3-methylimidazolium tris(pentafluoroethyl)trifluorophosphate) as an ionic liquid, under the same conditions as those of example 1, a negative electrode and a non-aqueous electrolyte secondary battery were prepared, and each evaluation was conducted.

### [Example 12]

Except that a negative electrode paste of the present invention was prepared with 0.5 parts by mass (5.0% by mass with respect to the binder) of MOEMPL-FAP (1-(2-methoxyethyl)-1-methylpyrrolidinium tris(pentafluoroethyl)trifluorophosphate) as an ionic liquid, under the same conditions as those of example 1, a negative electrode and a non-aqueous electrolyte secondary battery were prepared, and each evaluation was conducted.

### [Example 13]

Except that a negative electrode paste of the present invention was prepared with 0.25 parts by mass of PP13-TFSI and 0.25 parts by mass of P13-TFSI (each of them was 2.5% by mass with respect to the binder) as an ionic liquid, under the same conditions as those of example 1, a negative electrode and a non-aqueous electrolyte secondary battery were prepared, and each evaluation was conducted.

### [Example 14]

Except that a negative electrode paste of the present invention was prepared with 10.0 parts by mass (in terms of solid content) of a polyimide resin (Trade name: U-VARNISH A, manufactured by Ube Industries Ltd.,) as a binder and 0.5 parts by mass (5% by mass with respect to the binder) of PP13-TFSI as an ionic liquid, and a negative electrode paste coated on a current collector was vacuum dried at 400°C for 2 hours, under the conditions the same as those of example 1, a negative electrode and a non-aqueous electrolyte secondary battery were prepared, and each evaluation was conducted.

### [Example 15]

Except that a negative electrode paste of the present invention was prepared with 5.0 parts by mass (in terms of solid content) of a polyamide-imide resin synthesized in example 1 and 5.0 parts by mass (in terms of solid content) of a polyimide resin (Trade name: U-VARNISH A, manufactured by Ube Industries Ltd.,) as a binder and 0.5 parts by mass (5% by mass with respect to the binder) of PP13-TFSI as an ionic liquid, under the conditions the same as those of example 1, a negative electrode and a non-aqueous electrolyte secondary battery were prepared, and each evaluation was conducted.

### [Comparative Example 1]

Except that an ionic liquid was not added, under the conditions the same as those of example 1, a negative electrode and a non-aqueous electrolyte secondary battery were prepared, and each evaluation was conducted.

### [Comparative Example 2]

Except that an ionic liquid was not added, 10.0 parts by mass (in terms of solid content) of a polyvinylidene fluoride resin (Trade name: KF POLYMER #9210, manufactured by KUREHA Corporation) was used as a binder, and a negative electrode paste coated on a current collector was dried at 130°C for 5 hours, under the conditions the same as those of example 1, a negative electrode and a non-aqueous electrolyte secondary battery were prepared, and each evaluation was conducted.

Results of Examples 1 to 15 and Comparative Examples 1 to 2 are summarized in Table 1. As illustrated in Table 1, when a negative electrode pastes of the present invention was used, the curling could be suppressed and also the capacity retention rate was high. In comparison with this, in comparative example 1 where an ionic liquid was not added, the curling occurred, and in comparative example 2 where an ionic liquid was not added and the polyvinylidene fluoride resin was used as a binder, the capacity retention rate was poor.

**[Table 1]**

| | | Example | | | | | | | | | | | | | | | Comparative Example | |
|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 1 | 2 |
| Composition (parts by mass) | Silicon-based negative electrode active material | 90.0 | 90.0 | 90.0 | 90.0 | 90.0 | 90.0 | 90.0 | 90.01 | 90.0 | 90.0 | 90.0 | 90.0 | 90.0 | 90.0 | 90.0 | 90.0 | 90.0 |
| | Polyamide-imide resin | 10.0 | 10.0 | 10.0 | 10.0: | 10.0 | 10.0 | 10.0 | 10.0 | 10.0 | 10.0 | 10.0 | 10.0 | 10.0 | | 5.0 | 10.0 | |
| | Polyimide resin | | | | | | | | | | | | | | 10.0 | 5.0 | | |
| | Polyvinylidene fluoride resin | | | | | | | | | | | | | | | | | 10.0 |
| | PP13-TFSI | 0.5 | 0.01 | 0.1 | 2.0 | 5.0 | 10.0 | | | | | | | 0.25 | 0.5 | 0.5 | | |
| | P13-TFSI | | | | | | | 0.5 | | | | | | 0.25 | | | | |
| | PP14-TFSI | | | | | | | | 0.5 | | | | | | | | | |
| | TMPA-TFSI | | | | | | | | | 0.5 | | | | | | | | |
| | EMIm-FSI | | | | | | | | | | 0.5 | | | | | | | |
| | EMIm-FAP | | | | | | | | | | | 0.5 | | | | | | |
| | MOEMPL-FAP | | | | | | | | | | | | 0.5 | | | | | |
| Result | Curling evaluation (mm) | 5 | 25 | 8 | 4 | 3 | 1 | 6 | 6 | 6 | 6 | 6 | 6 | 5 | 5 | 6 | 36 | 1 |
| | Capacity retention rate at 100 cycles (%) | 83 | 84 | 84 | 83 | 82 | 60 | 83 | 81 | 80 | 83 | 81 | 81 | 82 | 82 | 82 | 83 | 0 |

### [Example 16]

### <Preparation of Coin Lithium Ion Secondary Battery>

Firstly, 85.0 parts by mass of a negative electrode active material and 15.0 parts by mass of polyamide-imide resin (in terms of solid content), which were prepared according to a method the same as that of example 1, were mixed, and therein 0.75 parts by mass of PP13-TFSI (5% by mass with respect to a binder) as an ionic liquid was added. In the mixture, N-methyl-2-pyrrolidone was added to prepare a negative electrode paste. The paste was coated on one side of an electrolytic copper foil having a width of 200 mm and a thickness of 11 µm by a doctor blade (coating width: 100 mm, coating thickness: 60 µm), vacuum dried at 85°C for 30 minutes, thereafter, an electrode was shaped under pressure with roller press, and the electrode was, after vacuum drying at 350°C for 2 hours, punched into a disc having a diameter of 15.858 mm as an negative electrode.

Further, 94.0 parts by mass of cobalt lithium oxide, 3.0 parts by mass of acetylene black and 3.0 parts by mass of polyvinylidene fluoride were mixed, therein N-methyl-2-pyrrolidone was added to prepare a paste. The paste was coated on an aluminum foil having a thickness of 16 µm, and vacuum dried at 85°C for 1 hours, thereafter, an electrode was shaped under pressure with roller press, and the electrode was, after vacuum drying at 350°C for 5 hours, punched into a disc of having a diameter of 15.858 mm as a positive electrode.

With the negative electrode and positive electrode prepared, the non-aqueous electrolyte solution prepared and a separator of a polypropylene microporous film having a thickness of 20 µm, 10 pieces of coin lithium secondary battery for evaluation were prepared (cell 1 to 10).

### <Charge/Discharge Test>

The coin lithium ion secondary batteries prepared were, after leaving at room temperature for 30 minutes, subjected to a charge/discharge test by use of a secondary battery charge/discharge test apparatus (manufactured by ASKA Electronic Co., Ltd.). Firstly, charge was conducted at a constant current equivalent to 0.5 CmA until a voltage of a coin cell reaches 4.2 V, after the cell voltage has reached 4.2 V, charge was performed by reducing a current while maintaining the cell voltage of 4.2 V, and at a time point when a current value became smaller than a value equivalent to 0.1 CmA, the charge was ended. Discharge was conducted at a constant current equivalent to 0.5 CmA, at a time point when the cell voltage has reached 2.5 V, the discharge was ended.

After repeating the charge/discharge test 5 times, an initial efficiency and an initial discharge capacity were calculated, and normal products and defective products were determined according to the following methods. When the initial efficiency is in the range of -0.5% to +1.0% of a value of a product that was aged for 48 hours and the initial discharge capacity is in the range of ±5% of a value of a product that was aged for 48 hours, it is determined as a normal product (denoted by o). When either one of the initial efficiency and the initial discharge capacity is deviated more than the above value, it is determined as a defective product (denoted by x). With the number of samples set to 10, the number of normal product is shown in Table 2.

### [Comparative Example 3]

Except that an ionic liquid was not added to a negative electrode paste, in a manner utterly the same as that of example 16, an electrode was prepared, then coin lithium ion secondary batteries were prepared. Thereafter, the charge/discharge test was conducted in a manner similar to that of example 16, the initial efficiency and the initial discharge capacity were calculated, and the number of normal products is counted. Results are shown in Table 2.

**[Table 2]**

| | | Example 16 | | | Comparative Example 3 | | |
|---|---|---|---|---|---|---|---|
| Composition (parts by mass) | Silicon-based negative electrode active material | 85.0 | | | 85.0 | | |
| | Polyamide-imide resin | 15.0 | | | 15.0 | | |
| | PP13-TFSI | 0.75 | | | | | |

| | | Initial efficiency (%) | Initial discharge capacity (mAh/cell) | Determination | Initial efficiency (%) | Initial discharge capacity (mAh/cell) | Determination |
|---|---|---|---|---|---|---|---|
| Result | Cell 1 | 70.4 | 5.31 | ○ | 68.8 | 5.17 | ○ |
| | Cell 2 | 70.4 | 5.32 | ○ | 68.6 | 4.85 | × |
| | Cell 3 | 70.3 | 5.31 | ○ | 68.2 | 4.72 | × |
| | Cell 4 | 70.7 | 5.31 | ○ | 68.2 | 4.82 | × |
| | Cell 5 | 69.1 | 5.16 | × | 67.2 | 4.83 | × |
| | Cell 6 | 68.7 | 4.73 | × | 67.1 | 4.56 | × |
| | Cell 7 | 69.8 | 5.21 | ○ | 68.6 | 5.03 | × |
| | Cell 8 | 70.0 | 5.27 | ○ | 68.8 | 5.21 | ○ |
| | Cell 9 | 70.0 | 5.24 | ○ | 68.6 | 5.09 | × |
| | Cell 10 | 69.7 | 5.25 | ○ | 68.1 | 4.75 | × |

| | | Average initial efficiency (%) 69.9 | Average initial discharge capacity (mAh/cell) 5.21 | The number of normal products 8/10 | Average initial efficiency (%) 68.2 | Average initial discharge capacity (mAh/cell) 4.90 | The number of normal products 2/10 |
|---|---|---|---|---|---|---|---|
| | Cells aged for 48 hours | 70.1 | 5.32 | | 69.3 | 5.26 | |

## Claims

1. A negative electrode paste that is used to manufacture a negative electrode of a non-aqueous electrolyte secondary battery, comprising:
(A) a silicon-based negative electrode active material;
(B) a binder containing at least one of a polyimide resin represented by the following general formula (1), 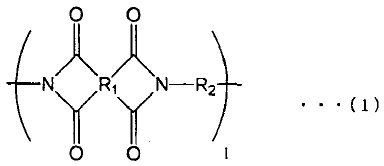 wherein R₁ represents a tetravalent alkyl group or a tetravalent aromatic hydrocarbon group, R₂ represents a divalent alkyl group or a divalent aromatic hydrocarbon group, and 1 represents an integer satisfying 2 ≤ 1 ≤ 500 and a polyamide-imide resin represented by the following general formula (2), 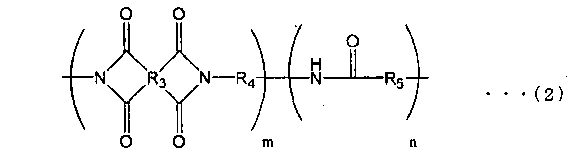 wherein R₃ represents a tetravalent alkyl group or a tetravalent aromatic hydrocarbon group, R₄ and R₅ represent a divalent alkyl group or a divalent aromatic hydrocarbon group, m represents an integer satisfying 2 ≤ m ≤ 500, and n represents an integer satisfying 2 ≤ n ≤ 500; and
(C) an ionic liquid.

2. The negative electrode paste according to claim 1, wherein the (C) ionic liquid has the melting temperature of 30°C or less.

3. The negative electrode paste according to claim 1 or 2, wherein the (C) ionic liquid is contained in the range of 0.1 to 50% by mass with the (B) binder assigned to 100% by mass.

4. A negative electrode obtained by coating the negative electrode paste of any one of claims 1 to 3 on a current collector and by drying.

5. A non-aqueous electrolyte secondary battery, comprising:
the negative electrode according to claim 4 as a negative electrode.

6. A method for manufacturing a negative electrode, in which a negative electrode paste is coated on a current collector, dried and used as a negative electrode of a non-aqueous electrolyte secondary battery, comprising the steps of:
coating the negative electrode paste of any one of claims 1 to 3 on the current collector; and
drying the negative electrode paste coated on the current collector.

## Patentansprüche

1. Negativelektrodenpaste, die verwendet wird, um eine Negativelektrode einer Sekundärbatterie mit nicht-wässrigem Elektrolyt anzufertigen, umfassend:
(A) ein aktives Negativelektrodenmaterial auf Silicium-Basis;
(B) ein Bindemittel, enthaltend mindestens eines aus einem Polyimidharz, das durch die folgende allgemeine Formel (1) dargestellt wird, 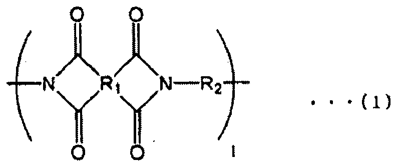 in der R₁ eine vierwertige Alkylgruppe oder eine vierwertige aromatische Kohlenwasserstoffgruppe darstellt, R₂ eine zweiwertige Alkylgruppe oder eine zweiwertige aromatische Kohlenwasserstoffgruppe darstellt und I eine ganze Zahl darstellt, die 2 ≤ I ≤ 500 genügt, und
einem Polyamid-Imid-Harz, das durch die folgende allgemeine Formel (2) dargestellt wird, 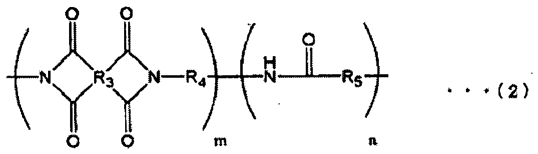 in der R₃ eine vierwertige Alkylgruppe oder eine vierwertige aromatische Kohlenwasserstoffgruppe darstellt, R₄ und R₅ eine zweiwertige Alkylgruppe oder eine zweiwertige aromatische Kohlenwasserstoffgruppe darstellen, m eine ganze Zahl darstellt, die 2 ≤ m ≤ 500 genügt und n eine ganze Zahl darstellt, die 2 ≤ n ≤ 500 genügt; und
(C) eine ionische Flüssigkeit.

2. Negativelektrodenpaste nach Anspruch 1, bei der die ionische Flüssigkeit eine Schmelztemperatur von 30 °C oder weniger aufweist.

3. Negativelektrodenpaste nach Anspruch 1 oder 2, bei der die (C) ionische Flüssigkeit im Bereich von 0,1 bis 50 Masse% enthalten ist, wobei dem (B) Bindemittel 100 Masse% zugeordnet werden.

4. Negativelektrode, erhalten durch Auftragen der Negativelektrodenpaste nach irgendeinem der Ansprüche 1 bis 3 auf einen Stromsammler und durch Trocknen.

5. Sekundärbatterie mit nicht-wässrigem Elektrolyt, umfassend:
die Negativelektrode nach Anspruch 4 als eine Negativelektrode.

6. Verfahren zur Herstellung einer Negativelektrode, bei dem eine Negativelektrodenpaste auf einen Stromsammler aufgetragen, getrocknet und als Negativelektrode einer Sekundärbatterie mit nicht-wässrigem Elektrolyt verwendet wird, umfassend die Schritte:
Auftragen der Negativelektrodenpaste nach irgendeinem der Ansprüche 1 bis 3 auf den Stromsammler, und
Trocknen der Negativelektrodenpaste, die auf dem Stromsammler aufgetragen ist.

## Revendications

1. Pâte pour électrode négative qui est utilisée pour fabriquer une électrode négative d'une batterie secondaire à électrolyte non aqueux, comprenant :
(A) un matériau actif d'électrode négative à base de silicium;
(B) un liant contenant au moins une parmi une résine de polyimide représentée par la formule générale (1) suivante, 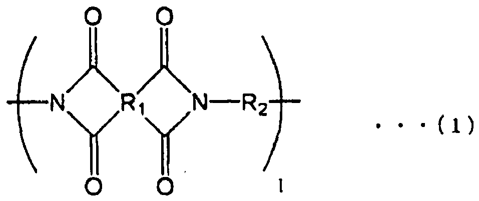 dans laquelle R₁ représente un groupe alkyle tétravalent ou un groupe hydrocarbure aromatique tétravalent, R₂ représente un groupe alkyle divalent ou un groupe hydrocarbure aromatique divalent, et I représente un entier satisfaisant à 2 ≤ I ≤ 500 et une résine de poly(amide-imide) représentée par la formule générale (2) suivante, 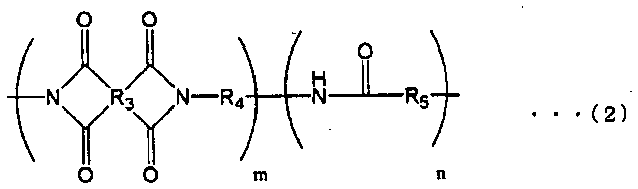 dans laquelle R₃ représente un groupe alkyle tétravalent ou un groupe hydrocarbure aromatique tétravalent, R₄ et R₅ représentent un groupe alkyle divalent ou un groupe hydrocarbure aromatique divalent, m représente un entier satisfaisant à 2 ≤ m ≤ 500, et n représente un entier satisfaisant à 2 ≤ n ≤ 500 ; et
(C) un liquide ionique.

2. Pâte pour électrode négative selon la revendication 1, dans laquelle (C) le liquide ionique a la température de fusion de 30 °C ou moins.

3. Pâte pour électrode négative selon la revendication 1 ou 2, dans laquelle (C) le liquide ionique est contenu dans la plage de 0,1 à 50 % en masse avec (B) le liant considéré comme 100 % en masse.

4. Électrode négative obtenue par enduction de la pâte pour électrode négative selon l'une quelconque des revendications 1 à 3 sur un collecteur de courant et par séchage.

5. Batterie secondaire à électrolyte non aqueux, comprenant :
l'électrode négative selon la revendication 4 comme une électrode négative.

6. Procédé de fabrication d'une électrode négative, dans lequel une pâte pour électrode négative est enduite sur un collecteur de courant, séchée et utilisée comme une électrode négative d'une batterie secondaire à électrolyte non aqueux, comprenant les étapes de :
enduction de la pâte pour électrode négative selon l'une quelconque des revendications 1 à 3 sur le collecteur de courant ; et
séchage de la pâte pour électrode négative enduite sur le collecteur de courant.
